# EUROPÄISCHE PATENTANMELDUNG

(11) **EP 1 469 583 A2**
(43) Veröffentlichungstag der Anmeldung: **20.10.2004**
(21) Anmeldenummer: 04009064.9
(22) Anmeldetag: 16.04.2004
(51) Int. Cl.: H02M 3/28, H02J 7/00

(54) **Schaltnetzteil, Ladegerät und tragbares Elektrowerkzeug**

(30) Priorität: 16.04.2003 DE 10317531
(71) Anmelder: Bech, David, 73099 Adelberg (DE)
(72) Erfinder: Bech, David, 73099 Adelberg (DE)
(74) Vertreter: Patentanwälte Ruff, Wilhelm, Beier, Dauster & Partner

(57) **Zusammenfassung**

1. Schaltnetzteil, Ladegerät und tragbares Elektrowerkzeug mit Gleichstrommotor.
2.1. Die Erfindung betrifft ein Schaltnetzteil zum Umsetzen einer Netzwechselspannung in eine Gleichspannung zum Betreiben eines tragbaren Gleichstromelektrowerkzeugs mit einem Quasiresonanzwandler, wobei der Quasiresonanzwandler wenigstens zwei Halbleiterschaltelemente und einen Toroidtransformator aufweist und eine Primärspannung des Toroidtransformators im Bereich des Nulldurchgangs des Stroms umschaltet und wobei ein Transformatorkern wenigstens abschnittsweise mit einer elektrisch isolierenden Beschichtung versehen ist.
2.2. Verwendung z.B. für tragbare Elektrowerkzeuge mit Gleichstrommotor und hoher elektrischer Leistungsaufnahme.
3. Fig. 1.

## Beschreibung

Die Erfindung betrifft ein Schaltnetzteil zum Umsetzen einer Netzwechselspannung in eine Gleichspannung zum Betreiben eines tragbaren Gleichstromelektrowerkzeugs.

Schnurlose Elektrowerkzeuge mit Akkuantrieb werden zunehmend in allen Bereichen der Arbeitswelt eingesetzt. Obwohl die Belastbarkeit des Akkus erheblich verbessert wurde, ist seine Kapazität das Hauptproblem bei der Anwendung, da bei tragbaren Geräten das Gewicht eine große Rolle spielt. Schnurlose Elektrowerkzeuge werden fast ausschließlich mit NI-Cd- oder NI-MH-Akkus einer Kapazität von 1,4Ah bis 3,5Ah angetrieben. Diese verhältnismäßig kleine Kapazität des Akkus erlaubt, je nach Anwendung, keinen langen Arbeitseinsatz. Deswegen wird mit einem Wechselakku gearbeitet, der wiederum schnell aufgeladen werden muss.

Für das Aufladen der Akkus werden Schnellladegeräte angewendet, die mit einem Schaltnetzteil ausgerüstet sind. Um die notwendigen Ladeströme zu realisieren, wird mit einer hohen Frequenz gearbeitet, die bezüglich der Entstörung (EMC) einen enormen Aufwand zur Folge hat.

Wenn man auf die Vorteile des schnurlosen Elektrowerkzeugs verzichten will, kann man das Gerät anstatt mit einem Akku auch mit einem Schaltnetzteil betreiben. Das Schaltnetzteil kann dabei in einem Gehäuse, das beispielsweise auf dem Fußboden steht, untergebracht sein. Das Gerät mit dem Schaltnetzteil in dem Gehäuse ist dann wechselstromseitig mit einem Netzstecker und gleichstromseitig mit einem Kabel versehen, das mit einem entsprechenden Akku-Adapter versehen ist.

Bei diesen bekannten Anwendungen treten folgende Nachteile auf:

Bekannte Schaltnetzteile ermöglichen lediglich eine Energieversorgung von Elektrowerkzeugen mit einer kleinen Leistungsaufnahme. Der verwendete Transformator kann nicht zuverlässig die großen Leistungen abgeben, die leistungsstarke Elektrowerkzeuge benötigen. Dies gilt insbesondere für intermittierend arbeitende Elektrowerkzeuge. Auch besteht eine erhebliche Kurzschlussgefahr. Bei einem Kurzschluss zwischen Primär- und Sekundärwicklung des Transformators können an den Kontakten des Akku-Adapters 230 Volt bzw. 110 Volt anliegen. Weitere unangenehme Eigenschaften bekannter Schaltnetzteile sind große Verluste, die durch die Temperaturentwicklung an den verwendeten Leistungstransistoren entstehen sowie die Existenz der parasitären Kapazitäten.

Zum anderen ist die Herstellung bekannter Schaltnetzteile sehr kostenaufwendig und dann, wenn das Schaltnetzteil in einem separaten, auf dem Fußboden angeordneten Gehäuse angeordnet ist, müssen darüber hinaus eine schlechte Mobilität durch eine kurze Gleichstromleitung oder große Leistungsverluste in Kauf genommen werden.

Mit der Erfindung soll ein leistungsfähiges und dabei einfach aufgebautes Schaltnetzteil für die Energieversorgung tragbarer Gleichstrom-Elektrowerkzeuge geschaffen werden. Mit der Erfindung soll auch ein leistungsfähiges Ladegerät sowie ein leistungsfähiges tragbares Gleichstromelektrowerkzeug geschaffen werden.

Das der Erfindung zugrundeliegende Problem wird durch ein Schaltnetzteil zum Umsetzen einer Netzwechselspannung in eine Gleichspannung zum Betreiben eines tragbaren Gleichstrom-Elektrowerkzeugs gelöst, bei dem ein Quasiresonanzwandler mit wenigstens zwei Halbleiterschaltelementen und einem Toroidtransformator vorgesehen ist, wobei eine Primärspannung des Toroidtransformators im Bereich des Nulldurchgangs des Stroms umgeschaltet wird und wobei ein Transformatorkern wenigstens abschnittsweise mit einer elektrisch isolierenden Beschichtung versehen ist.

Durch Einsatz eines Quasiresonanzwandlers können auch hohe Leistungen mit geringen Verlusten umgesetzt werden. Die Verbindung des Quasiresonanzwandlers mit einem neuartigen Sicherheitstoroidtrafo ermöglicht einen Dauerbetrieb, insbesondere von intermittierend arbeitenden Gleichstrompresswerkzeugen, Blindnietabreißgeräten, und dergleichen. Dem Elektrowerkzeug kann mit dem erfindungsgemäßen Schaltnetzteil eine hohe elektrische Leistung von 1000 Watt und mehr zugeführt werden und dennoch werden die strengen Sicherheitsbestimmungen für Elektrowerkzeuge erfüllt. Speziell Gleichstrom-Elektrowerkzeuge sind dabei gegenüber Wechselstrom-Elektrowerkzeugen sehr vorteilhaft, da ein Gleichstrommotor sehr einfach in der Drehzahl und im Drehmoment verstellbar ist. Gleichstrommotoren sind deswegen für den Antrieb von Elektrowerkzeugmaschinen, insbesondere in der Autoindustrie, prädestiniert. Mit Gleichstrom-Elektrowerkzeugen können auch die Anforderungen bezüglich der Arbeitssicherheit und weitere Sicherheitsvorschriften erfüllt werden. Darüber hinaus kann bei Gleichstrommotoren auf einfache Weise das abgegebene Drehmoment bestimmt, gemessen und angezeigt werden, was für das Einstellen und kontrollieren des gewünschten Drehmoments, insbesondere in der Autoindustrie, sehr wichtig ist. In der Zukunft werden für Elektrowerkzeuganwendungen stets größere Leistungen verlangt werden, wobei solche höheren Leistungsanforderungen mit Gleichstrommotoren einfacher als mit Wechselstrommotoren erfüllt werden können. Durch die Erfindung wird ein Schaltnetzteil mit einfachem Aufbau bereitgestellt, das überraschenderweise die hohen Leistungs- und Sicherheitsanforderungen für tragbare Gleichstrom-Elektrowerkzeuge erfüllt und darüber hinaus sehr kompakt aufbaubar ist.

In Weiterbildung der Erfindung ist der Transformatorkern mit einer Epoxydharzbeschichtung versehen.

Mittels einer Epoxydharzbeschichtung des Kerns, beispielsweise eines Ferritkerns des Toroidtransformators wird die zur Erfüllung der strengen Sicherheitsbestimmungen erforderliche elektrische Isolierung bereitgestellt. Auch bei einem Ausfall der Isolierungen der Transformatorwindungen kann dadurch mit großer Sicherheit eine galvanische Trennung von Primärseite und Sekundärseite des Transformators sichergestellt werden.

In Weiterbildung der Erfindung besteht die Primär- und/oder Sekundärwicklung des Toroidtransformators wenigstens abschnittsweise aus teflonbeschichtetem Draht.

Auf diese Weise kann die Sicherheit des erfindungsgemäßen Schaltnetzteils weiter erhöht werden, da die Teflonschicht der Drahtwindungen eine weitere Isolierung bereitstellt.

In Weiterbildung,der Erfindung sind wenigstens zwei Halbleiterschaltelemente als Transistoren ausgebildet und ein jeweiliger Steueranschluss der Halbleiterschaltelemente ist einerseits mit einer jeweiligen Steuerleitung und andererseits über einen jeweiligen Widerstand mit Masse verbunden.

Auf diese Weise wird eine sehr zuverlässige Ausführung des Schaltnetzteiles erzielt, was insbesondere bei den hohen entnehmbaren Leistungen von erheblicher Bedeutung ist. Die Widerstände sind dabei so bemessen, dass ohne Anliegen einer definierten Steuerspannung auf der Steuerleitung der jeweilige Transistor zuverlässig geschlossen ist. Dies bedeutet, dass auch gewisse Spannungsschwankungen auf der Steuerleitung, sei es durch elektromagnetische Einkopplung oder dergleichen, im an und für sich ausgeschalteten Zustand nicht zu einem Schaltvorgang des Transistors führen dürfen. Beispielsweise können die Widerstände einen Widerstandswert von 1kOhm haben. Der Einsatz dieser Widerstände ist auch dann vorteilhaft, wenn für die Ansteuerung der Transistoren beispielsweise eine integrierte Schaltung verwendet wird, die ohnehin im Nullzustand bereits die Steuerleitung mit der Masse verbindet. Dies beispielsweise deshalb, um auch elektromagnetische Einkopplungen sicher ausgleichen zu können, speziell dann, wenn die integrierte Schaltung ausgeschaltet ist.

In Weiterbildung der Erfindung nutzt der Quasiresonanzwandler zur Bildung eines Schwingkreises eine Streuinduktivität des Toroidtransformators.

Auf diese Weise sind keine separaten Induktivitäten in der Quasiresonanzwandlerschaltung vorzusehen. Überraschenderweise hat sich dabei herausgestellt, dass bei der erfindungsgemäßen Verwendung eines Toroidtransformators mit zusätzlicher Beschichtung des Transformatorkerns die prinzipbedingt geringe Streuinduktivität dennoch ausreicht, um einen geeigneten Schwingkreis aufzubauen. Eine vorteilhafte Schwingkreisfrequenz liegt beispielsweise bei 30kHz.

In Weiterbildung der Erfindung sind am Ausgang des Toroidtransformators zwei Dioden zum Gleichrichten der Ausgangsspannung vorgesehen, wobei ein Thermoschalter vorgesehen ist, der die Temperatur der Dioden erfasst und der bei Überschreiten einer vorbestimmten Temperatur der Dioden eine Energiezufuhr in die Primärwicklung des Toroidtransformators unterbricht.

Auf diese Weise kann eine Überhitzung der Ausgangsseite des Schaltnetzteils zuverlässig vermieden werden. Dies ist insbesondere bei intermittierend arbeitenden Gleichstrom-Elektrowerkzeugen mit sehr hoher Leistungsaufnahme von großer Bedeutung. Die Dioden sind dabei vorzugsweise als Schottky-Dioden ausgebildet, so dass aufgrund der geringen, Kapazität eine geringe Abschaltzeit im Sinne einer guten Gleichrichtungswirkung bei hoher Schaltfrequenz erzielt wird. Die Dioden sind vorzugsweise auch mit einem Kühlkörper versehen und der Thermoschalter, der die Temperatur des Kühlkörpers erfasst, ist vorzugsweise reversibel ausgebildet.

In Weiterbildung der Erfindung ist wenigstens der Quasiresonanzwandler mit dem Toroidtransformator in ein Akkugehäuse eines tragbaren Elektrowerkzeugs integriert.

Durch die Erfindung wird damit ein sehr leistungsstarkes Schaltnetzteil bereitgestellt, das dennoch in sehr einfacher und kompakter Weise am Elektrowerkzeug selbst angeordnet werden kann. Vorzugsweise ist das Schaltnetzteil bis auf ein Wechselstromkabel und einen Netzstecker vollständig in ein Akkugehäuse integriert.

In Weiterbildung der Erfindung ist ein Netzadapter vorgesehen, der neben einem Netzstecker einen Vorladewiderstand, ein Sicherungselement und ein Entstörelement aufweist.

Ein solcher Netzadapter wird lediglich bei sehr hohen geforderten elektrischen Leistungen benötigt und schützt das eigentliche Schaltnetzteil. Der vorliegende Ladewiderstand, das Sicherungselement und das Entstörelement können beispielsweise im Bereich des Netzsteckers vorgesehen sein, um das eigentliche Schaltnetzteil weiter in einem kompakten Akkugehäuse unterbringen zu können.

In Weiterbildung der Erfindung ist das Akkugehäuse mit dem Schaltnetzteil an einen Adapter ankoppelbar ausgebildet, der mit einer Ankoppeleinrichtung zum elektrischen und mechanischen Ankoppeln eines Akkumulators für ein Elektrowerkzeug versehen ist. Alternativ kann das Akkugehäuse mit dem Schaltnetzteil mit einer Ankoppeleinrichtung zum elektrischen und mechanischen Ankoppeln eines Akkumulators für ein Elektrowerkzeug versehen sein.

Auf diese Weise kann das erfindungsgemäße Schaltnetzteil auch zum Aufladen eines Akkumulators verwendet werden. Beispielsweise kann das Schaltnetzteil mit einem zusätzlichen Kontakt und der Transformator kann mit einem weiteren Abgriff versehen sein, um ein Aufladen eines Akkumulators zu ermöglichen. Durch die erfindungsgemäße Ausbildung des Schaltnetzteils wird es möglich, auf ein separates Ladegerät zu verzichten und trotzdem einem Benutzer alle Funktionalitäten des Akkubetriebs, des Schaltnetzteilbetriebs und des Aufladens eines Akkumulators zur Verfügung zu stellen, wobei lediglich ein einziges Schaltnetzteil benötigt wird.

Das der Erfindung zugrundeliegende Problem wird auch durch ein Ladegerät für Akkumulatoren eines Elektrowerkzeuges mit einem erfindungsgemäßen Schaltnetzteil gelöst.

Beispielsweise kann das erfindungsgemäße Schaltnetzteil in ein an und für sich konventionelles Ladegerätgehäuse eingebaut werden, so dass ein kostengünstiges und dabei sehr leistungsfähiges Ladegerät bereitgestellt wird.

Das der Erfindung zugrundeliegende Problem wird auch durch ein tragbares Elektrowerkzeug mit Gleichstrommotor mit einem erfindungsgemäßen Schaltnetzteil gelöst.

Durch ein solches tragbares Elektrowerkzeug können die Vorteile eines Gleichstrommotor-Elektrowerkzeuges mit der Dauereinsatzbereitschaft eines netzgebundenen Elektrogeräts kombiniert werden. Durch das erfindungsgemäße Schaltnetzteil können dabei auch sehr hohe elektrische Leistungen, intermittierend oder im Dauerbetrieb, entnommen werden und gleichzeitig können auch strengste Sicherheitsbestimmungen erfüllt werden. Darüber hinaus ermöglicht es das erfindungsgemäße Schaltnetzteil, auch strengste Anforderungen bezüglich der elektromagnetischen Verträglichkeit zu erfüllen.

In Weiterbildung der Erfindung ist das Schaltnetzteil in ein Gehäuse des Elektrowerkzeugs integriert.

Dadurch kann ein kabelgebundenes kompaktes und leistungsfähiges Gleichstrom-Elektrowerkzeug bereitgestellt werden.

In Weiterbildung der Erfindung ist das Schaltnetzteil in einem separaten Netzteilgehäuse vorgesehen, das an das Gehäuse des Elektrowerkzeuges ankoppelbar ist. Das Netzteilgehäuse kann vorteilhafterweise die Form eines Akkugehäuses für das tragbare Elektrowerkzeug aufweisen.

Auf diese Weise wird bei hoher Leistungsfähigkeit die Flexibilität des tragbaren Elektrowerkzeuges beibehalten.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine Darstellung eines erfindungsgemäßen Schaltnetzteiles sowie eines tragbaren Elektrowerkzeugs,
- Fig. 2: ein Wicklungsschema eines Transformators in dem erfindungsgemäßen Schaltnetzteil,
- Fig. 3: eine Draufsicht auf einen Transformator des erfindungsgemäßen Schaltnetzteiles,
- Fig. 4: eine Seitenansicht des Transformators der Fig. 3,
- Fig. 5: ein Schaltbild des erfindungsgemäßen Schaltnetzteiles,
- Fig. 6: eine Darstellung des erfindungsgemäßen Schaltnetzteiles, eines nes Ladegerätadapters sowie eines Akkupacks und
- Fig. 7: eine Seitenansicht und eine Draufsicht auf ein erfindungsgemäßes Ladegerät.

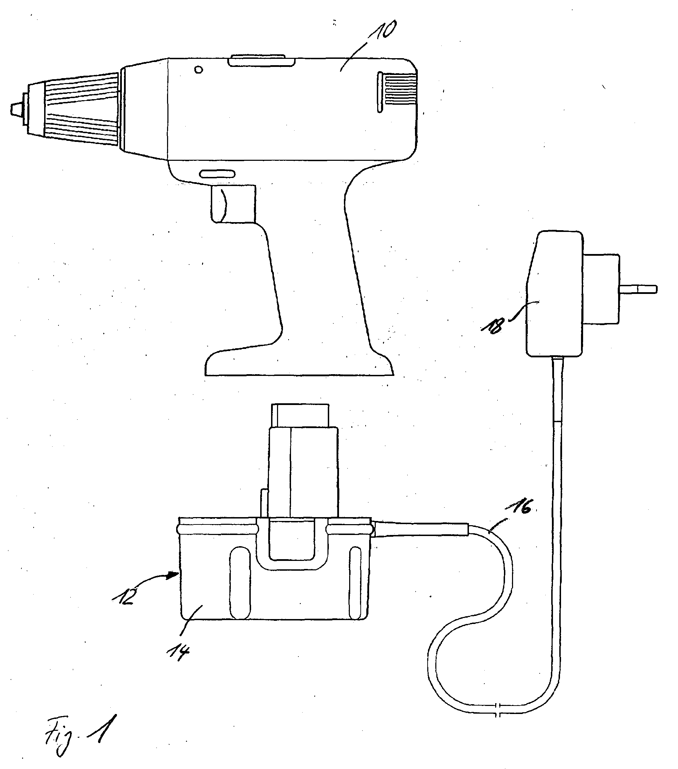

In der Fig. 1 ist ein tragbares Elektrowerkzeug 10 dargestellt, das mit einem Gleichstrommotor versehen ist und das üblicherweise über einen Akkumulator mit Energie versorgt wird, der an das untere Ende eines Handgriffes ankoppelbar ist. Weiterhin ist ein Schaltnetzteil 12 dargestellt, das in einem Gehäuse 14 angeordnet und über ein Netzkabel 16 mit einem Netzadapter 18 verbunden ist. Da das Schaltnetzteil 12 ein Gehäuse in der Form eines sogenannten Akkupacks aufweist, kann es in die am Elektrowerkzeug 10 vorhandenen Halterungen am unteren Ende des Haltegriffs eingeklipst werden. Wie ein Akkupack steht das Gehäuse 14 mit dem Schaltnetzteil 12 nach dem Anklipsen an den Handgriff mechanisch und elektrisch mit dem Elektrowerkzeug 10 in Verbindung.

Der Netzadapter 18 weist neben einem Netzstecker noch einen Vorladewiderstand sowie ein Sicherungselement und ein Entstörelement auf. Es ist dabei aber festzustellen, dass der Vorladewiderstand, das Sicherungselement und/oder das Entstörelement im Netzadapter 18 nur dann vorgesehen werden müssen, wenn sehr große elektrische Leistungen mit dem Elektrowerkzeug 10 entnommen werden sollen. Bei geringeren Leistungen kann anstelle des Netzadapters 18 ein einfacher Netzstecker vorgesehen werden.

Bereits aus der Darstellung der Fig. 1 ist zu erkennen, dass sich das erfindungsgemäße Schaltnetzteil in besonders einfacher Weise gegen einen Akkupack austauschen lässt. Die prinzipbedingten Vorteile des Gleichstrommotors hinsichtlich seiner gegenüber einem Wechselstrommotor besseren Einstellbarkeit von Drehmoment und Drehzahl sowie auch bezüglich des Leistungsgewichts lassen sich dadurch auch im Netzbetrieb nutzen. Durch das erfindungsgemäße Schaltnetzteil 12 können dabei auch sehr hohe elektrische Leistungen im Dauerbetrieb oder intermittierend vom Elektrowerkzeug 10 entnommen werden, wobei, wie in der Fig. 1 zu erkennen ist, dennoch ein äußerst kompakter und gut handhabbarer Aufbau des Schaltnetzteiles gegeben ist. Abgesehen vom Kabel 16 verändert sich die Handhabbarkeit des Elektrowerkzeugs 10 für einen Benutzer nicht, unabhängig davon, ob nun ein Akkupack oder das Schaltnetzteil 12 in den Griff eingesteckt ist.

Die Darstellung der Fig. 2 zeigt das Wicklungsschema eines Transformators in dem erfindungsgemäßen Schaltnetzteil 12 der Fig. 1. Auf der Primärseite ist eine Primärwicklung N1 vorgesehen und auf der Sekundärseite sind zwei Sekundärwicklungen N2 und N3 vorgesehen. Die Sekundärwicklungen N2 und N3 weisen einen gemeinsamen Mittenabgriff 5 auf. Die Sekundärwicklungen N2 und N3 sind gleichsinnig gewickelt.

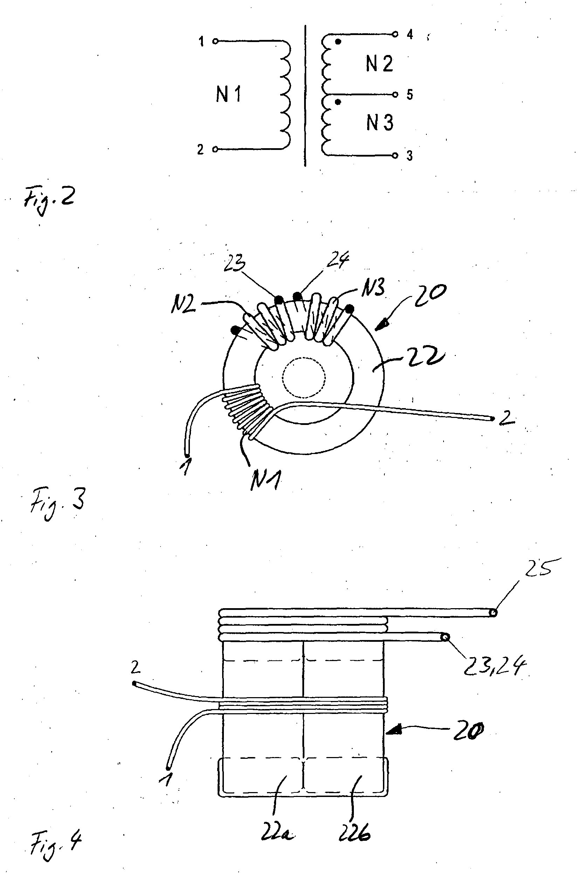

In der Darstellung der Fig. 3 ist ein Toroidtransformator 20 dargestellt, der in dem erfindungsgemäßen Schaltnetzteil 12 eingesetzt wird. Auf einen torusförmigen Transformatorkern 22 sind die Primärwicklung N1 und die beiden Sekundärwicklungen N2, N3 aufgewickelt. Analog zu Fig. 2 ist mit der Bezugsziffer 1 der Anfang der Primärwicklung N1 und mit der Bezugsziffer 2 das Ende der Primärwicklung N1 bezeichnet.

Bei der Sekundärwicklung N2 ist mit der Bezugsziffer 23 der Anfang der Sekundärwicklung N2 bezeichnet und mit der Bezugsziffer 24 ist der Anfang der Sekundärwicklung N3 bezeichnet.

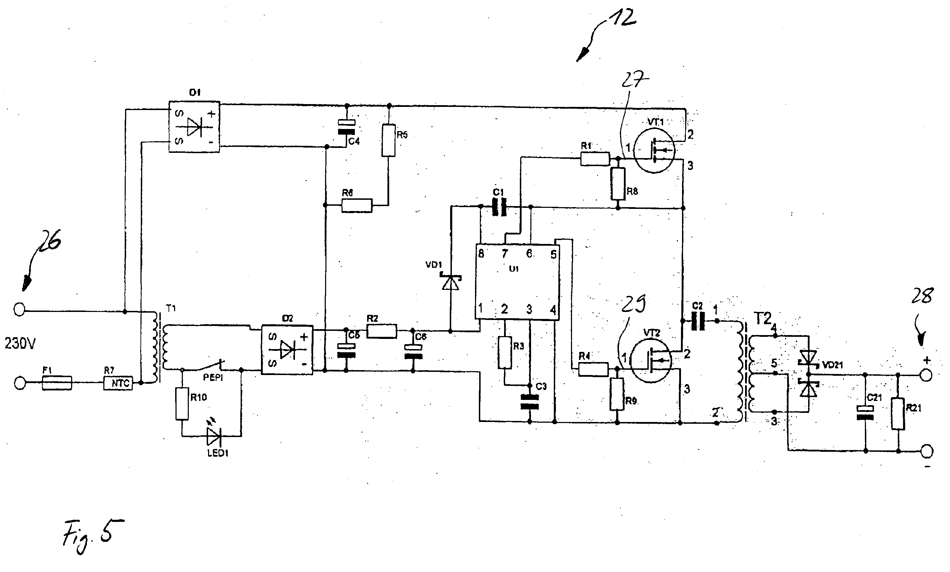

Die Darstellung der Fig. 4 zeigt den Transformator 20 in einer Seitenansicht. Es ist dabei zu erkennen, dass der Transformatorkern 22 aus zwei Ferritringen 22a und 22b besteht, die aufeinandergesetzt sind. Mit den Bezugsziffern 23, 24 ist in der Darstellung der Fig. 4 der Anfang der Sekundärwicklungen N2 und N3 bezeichnet und mit der Bezugsziffer 25 ist das Ende der Sekundärwicklungen N2 und N3 bezeichnet.

Die Ferritkerne 22a, 22b des Toroidtransformators 20 sind mit einer Epoxydharzbeschichtung versehen und die Primärwicklung N1 sowie die Sekundärwicklungen N2, N3 bestehen jeweils aus teflonbeschichtetem Draht. Selbst wenn also die Teflonbeschichtung der jeweiligen Drähte schadhaft werden sollte, wird durch die Epoxydharzbeschichtung der Ferritkerne 22a, 22b immer noch ein Kurzschluss zwischen der Primärwicklung N1 und den Sekundärwicklungen N2 oder N3 verhindert. Darüber hinaus ist anhand der Fig. 3 und 4 zu erkennen, dass die Primärwicklung N1 und die Sekundärwicklungen N2, N3 auch räumlich getrennt auf dem Umfang des Transformatorkerns 22 angeordnet sind. Auch dadurch wird die Sicherheit des Toroidtransformators 20 erhöht.

Der Toroidtransformator 20 erlaubt die Übertragung hoher elektrischer Leistungen und ermöglicht es dennoch, die bei Elektrowerkzeugen strengen Sicherheitsanforderungen sowie die strengen Anforderungen bezüglich der elektromagnetischen Verträglichkeit zu erfüllen. Der Toroidtransformator 20 weist aber auch eine gewisse Streuinduktivität auf, die bei dem erfindungsgemäßen Schaltnetzteil zur Bildung eines Schwingkreises genutzt wird. Insgesamt ermöglicht der Einsatz des Toroidtransformators 20 in dem erfindungsgemäßen Schaltnetzteil bei vergleichsweise einfachem Aufbau eine zuverlässige Bereitstellung hoher elektrischer Leistungen.

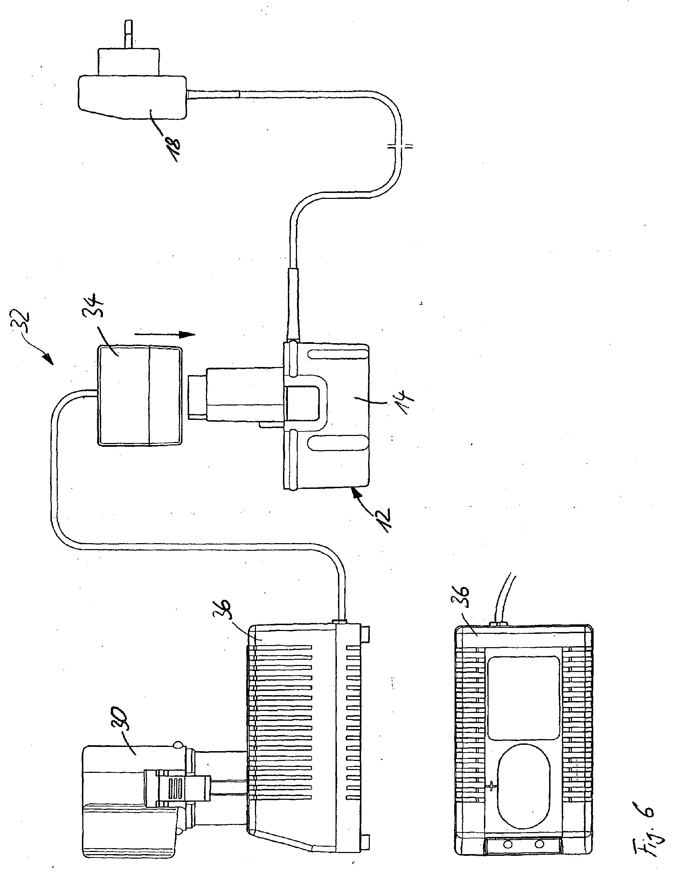

Die Darstellung der Fig. 5 zeigt ein Schaltbild einer bevorzugten Ausführungsform des erfindungsgemäßen Schaltnetzteiles. Ein Netzanschluss 26 wird mit 230 Volt Wechselspannung versorgt und am Ausgang 28 des Schaltnetzteiles 12 kann dann Gleichstromenergie entnommen werden. Das Schaltnetzteil 12 weist dabei mehrere Schaltkreise mit unterschiedlichen Funktionen auf.

Ein Temperaturschutzschaltkreis besteht aus einem reversiblen Thermoschalter PEPI, der die Temperatur eines Kühlkörpers der Schottky-Dioden VD21 zum Gleichrichten einer Ausgangsspannung des Transformators T2, entsprechend dem Transformator 20 in den Fig. 3 und 4, überwacht. Steigt eine Temperatur der Schottky-Dioden VD21 über beispielsweise 90°C, öffnet der reversible Thermoschalter PEPI, so dass eine Energieversorgung des Transformators T2 unterbrochen wird. Dieser geöffnete Zustand des Thermoschalters PEPI wird durch das Aufleuchten der lichtemittierenden Diode LED1 angezeigt.

Das Schaltnetzteil weist weiterhin einen Quasiresonanzwandler auf, dessen Hauptbestandteile die beiden MOS-Feldeffekttransistoren VT1 und VT2 sowie die integrierte Schaltung U1 sind. Die integrierte Schaltung U1 wird mittels des Transformators T1 mit Energie versorgt und schaltet abwechselnd mittels der Transistoren VT1 und VT2 eine Gleichspannung oder die Masse auf die Primärwicklung des Transformators T2. Die durch den Widerstand R3 und dem Kondensator C3 bestimmte Schaltfrequenz der integrierten Schaltung U1 ist dabei auf eine Resonanzfrequenz eines Schwingkreises mit der Kapazität C2 und der Streuinduktivität des Transformator T2 abgestimmt, so dass die Schaltvorgänge der Transistoren VT1 und VT2 jeweils im Nulldurchgang des Stromes erfolgen. Im Ruhezustand sind die Transistoren VT1 und VT2 mittels der Widerstände R8 bzw. R9 geschlossen, die jeweils zwischen einen Steueranschluss der Transistoren VT1 bzw. VT2 und die Masse eingeschaltet sind. Insbesondere dann, wenn die integrierte Schaltung U1 ausgeschaltet und nicht mit elektrischer Energie versorgt ist, wird durch die Widerstände R8 bzw. R9 sichergestellt, dass die Transistoren VT1 und VT2 zuverlässig gesperrt sind. Dies ist für die Zuverlässigkeit des Schaltnetzteiles 12 von großer Bedeutung.

Die Schaltfrequenz der integrierten Schaltung U1 wird auf 30 kHz eingestellt, um die Verluste im Toroidtransformator T2 möglichst klein zu halten.

Der Transistor T1, die Gleichrichterbrücke D2 sowie die Kapazitäten C5, C6 und der Widerstand R2 und die integrierte Schaltung U1 mit der zugehörigen Beschaltung, speziell der Widerstand R3 und der Kondensator C3, bilden einen Generator mit einem Erregungsstromkreis.

Ein Leistungsteil wird durch die beiden Transistoren VT1 und VT2 sowie die Gleichrichterbrücke D1 mit dem Filterkondensator C4 und den Widerständen R5 und R6 gebildet. Mittels der Gleichrichterbrücke D1 wird die Netzspannung gleichgerichtet, mit dem Kondensator C4 gefiltert und dann unmittelbar dem Transistor VT1 zugeführt.

Ein Ausgangsteil wird durch die Sekundärwicklungen des Toroidtransformators C2 und die Schottky-Dioden VD21 sowie den Filter mit dem Kondensator C21 und dem Widerstand R21 gebildet. Die an den Sekundärwicklungen des Toroidtransformators T2 abgegriffene Spannung wird mittels der Schottky-Dioden VD21 gleichgerichtet. Als Filter dienen der Kondensator C21 und der Widerstand R21. Am Ausgang 28 steht dann eine Gleichspannung zur Verfügung.

Unmittelbar nach dem Netzanschluss 26 ist noch vor die Primärwicklung des Transformators T1 ein Sicherungselement F1 sowie ein Vorladewiderstand R7 (NTC) eingeschaltet.

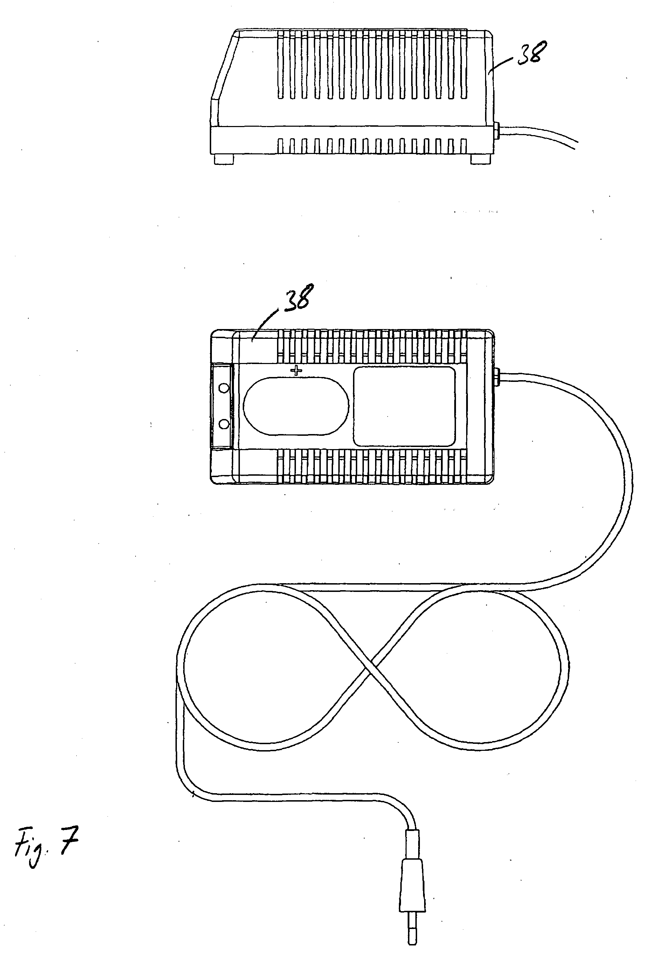

In der Darstellung der Fig. 6 ist das erfindungsgemäße Schaltnetzteil 12 in einer Konfiguration dargestellt, in der das Schaltnetzteil 12 zum Laden eines Akkupacks 30 verwendet werden kann. Das Schaltnetzteil 12 mit dem Netzadapter 18 wird hierzu nicht in dem Griff eines Elektrowerkzeugs, sondern in einen Adapter 32 eingesteckt, der zum einen eine Buchse 34 zum Einstecken des Gehäuses 14 des Schaltnetzteiles 12 und zum anderen ein ladegerätähnliches Gehäuse 36 aufweist, in das der Akkupack 30 eingesteckt werden kann. Die Buchse 34 und das Ladegerätgehäuse 36 sind mittels eines Kabels miteinander verbunden. Es ist aber selbstverständlich auch möglich, am Ladegerätgehäuse selbst zwei Buchsen vorzusehen, wobei in die eine dann das Gehäuse 14 des Schaltnetzteiles 12 und in die andere dann der Akkupack 30 eingesteckt wird. Die Fig. 6 zeigt weiter eine Draufsicht auf das Ladegerätgehäuse 36. Durch den Adapter 32 kann somit zusammen mit dem Schaltnetzteil 12 eine Ladegerätfunktion realisiert werden, ohne dass ein separates Ladegerät bereitgestellt werden müsste. Ein Benutzer kann somit mit dem Schaltnetzteil 12, dem Adapter 32 und dem Akkupack 30 frei wählen, ob er sein Elektrowerkzeug am Netz oder mit dem Akkupack 30 betreiben will, wobei der Akkupack 30 dann mittels des Adapters 32 und des Schaltnetzteiles 12 wieder aufgeladen werden kann.

Der Adapter 32 kann, beispielsweise im Ladegerätgehäuse 36, noch Schaltkreise enthalten, um ein möglichst schonendes oder schnelles Aufladen des Akkupacks 30 zu realisieren, beispielsweise durch Vorgabe und Überwachung spezieller Ladestromverläufe. Weiterhin kann das Ladegerätgehäuse 36 LEDs oder sonstige Anzeigevorrichtungen enthalten, mit denen ein Ladezustand und/oder eine mögliche Beendigung des Ladevorgangs angezeigt werden können.

Um ein Vertauschen von Akkupack 30 und Schaltnetzteil 12 am Adapter 32 zu vermeiden, kann die Buchse 34 und das Gehäuse 14 des Schaltnetzteiles 12 so ausgebildet sein, dass am Gehäuse 14 ein weiterer elektrischer Abgriff speziell für die Ladegerätfunktion des Schaltnetzteiles 12 vorgesehen ist. Wenn somit anstelle des Gehäuses 14 der Akkupack 30 die Buchse 34 und das Gehäuse 14 in das Ladegerätgehäuse 36 eingesteckt würde, könnte dadurch ein elektrischer Kontakt zwischen Akkupack 30 und Schaltnetzteil 12 verhindert werden.

In der Darstellung der Fig. 7 ist in Seitenansicht und Draufsicht ein erfindungsgemäßes Ladegerät 38 dargestellt, das das erfindungsgemäße Schaltnetzteil 12 enthält. Mittels des Schaltnetzteiles 12 kann ein preisgünstiges, kompaktes und dabei sehr leistungsfähiges Ladegerät für Akkupacks realisiert werden.

## Patentansprüche

1. Schaltnetzteil zum Umsetzen einer Netzwechselspannung in eine Gleichspannung zum Betreiben eines tragbaren Gleichstromelektrowerkzeugs mit einem Quasiresonanzwandler, wobei der Quasiresonanzwandler wenigstens zwei Halbleiterschaltelemente (VT1, VT2) und einen Toroidtransformator (20, T2) aufweist und eine Primärspannung des Toraidtransformators (20, T2) im Bereich des Nulldurchgangs des Stroms umschaltet und wobei ein Transformatorkern (22, 22a, 22b) wenigstens abschnittsweise mit einer elektrisch isolierenden Beschichtung versehen ist.

2. Schaltnetzteil nach Anspruch 1, **dadurch gekennzeichnet, dass** der Transformatorkern (22, 22a, 22b) mit einer Epoxydharzbeschichtung versehen ist.

3. Schaltnetzteil nach Anspruch 1 oder 2, **dadurch gekennzeichnet, dass** die Primär- und/oder Sekundärwicklung des Toroidtransformators (20, T2) wenigstens abschnittsweise aus teflonbeschichtetem Draht besteht.

4. Schaltnetzteil nach einem der vorstehenden Ansprüche, **dadurch gekennzeichnet, dass** wenigstens zwei Halbleiterschaltelemente als Transistoren (VT1, VT2) ausgebildet sind und ein jeweiliger Steueranschluss der Halbleiterschaltelemente (VT1, VT2) einerseits mit einer jeweiligen Steuerleitung (27, 29) und andererseits über einen jeweiligen Widerstand (R8, R9) mit Masse verbunden ist.

5. Schaltnetzteil nach wenigstens einem der vorstehenden Ansprüche, **dadurch gekennzeichnet, dass** der Quasiresonanzwandler zur Bildung eines Schwingkreises eine Streuinduktivität des Toroidtransformators (20, T2) nutzt.

6. Schaltnetzteil nach wenigstens einem der vorstehenden Ansprüche, **dadurch gekennzeichnet, dass** am Ausgang des Toroidtransformators zwei Dioden (VD21) zum Gleichrichten der Ausgangsspannung vorgesehen sind, wobei ein Thermoschalter (PEPI) vorgesehen ist, der die Temperatur der Dioden (VD21) erfasst und der bei Überschreiten einer vorbestimmten Temperatur der Dioden (VD21) eine Energiezufuhr in die Primärwicklung des Toroidtransformators (20, T2) unterbricht.

7. Schaltnetzteil nach wenigstens einem der vorstehenden Ansprüche, **dadurch gekennzeichnet, dass** wenigstens der Quasiresonanzwandler mit dem Toroidtransformator (20, T2) in ein Akkugehäuse (14) eines tragbaren Elektrowerkzeugs (10) integriert ist.

8. Schaltnetzteil nach Anspruch 7, **dadurch gekennzeichnet, dass** ein Netzadapter (18) vorgesehen ist, der neben einem Netzstecker einen Vorladewiderstand (R7), ein Sicherungselement (F1) und ein Entstörelement aufweist.

9. Schaltnetzteil nach Anspruch 7 oder 8, **dadurch gekennzeichnet, dass** das Akkugehäuse (14) mit dem Schaltnetzteil (12) an einen Adapter (32) ankoppelbar ausgebildet ist, der mit einer Ankoppeleinrichtung zum elektrischen und mechanischen Ankoppeln eines Akkumulators (30) für ein Elektrowerkzeug versehen ist oder dass das Akkugehäuse mit dem Schaltnetzteil mit einer Ankoppeleinrichtung zum elektrischen und mechanischen Ankoppeln eines Akkumulators für ein Elektrowerkzeug versehen ist.

10. Ladegerät für Akkumulatoren eines Elektrowerkzeugs mit einem Schaltnetzteil nach wenigstens einem der vorstehenden Ansprüche.

11. Tragbares Elektrowerkzeug mit Gleichstrommotor mit einem Schaltnetzteil nach wenigstens einem der vorstehenden Ansprüche 1 bis 9.

12. Tragbares Elektrowerkzeug nach Anspruch 11, **dadurch gekennzeichnet, dass** das Schaltnetzteil in ein Gehäuse des Elektrowerkzeugs integriert ist.

13. Tragbares Elektrowerkzeug nach Anspruch 11, **dadurch gekennzeichnet, dass** das Schaltnetzteil (12) in einem separaten Netzteilgehäuse (14) vorgesehen ist, das an das Gehäuse des Elektrowerkzeugs (10) ankoppelbar ist.

14. Tragbares Elektrowerkzeug nach Anspruch 13, **dadurch gekennzeichnet, dass** das Netzteilgehäuse (14) die Form eines Akkugehäuses für das tragbare Elektrowerkzeug (10) aufweist.
